# EUROPEAN PATENT APPLICATION

(11) **EP 3 647 373 A1**
(43) Date of publication of application: **06.05.2020**
(21) Application number: 18825433.8
(22) Date of filing: 27.06.2018
(51) Int. Cl.: C08L 83/05, C08K 3/36, C08L 83/04, C08L 83/07

(54) **CURABLE SILICONE COMPOSITION FOR USE WITH DISPENSER**

(30) Priority: 28.06.2017 JP 2017126291
(71) Applicant: Sekisui Polymatech Co., Ltd., Saitama-city, Saitama 338-0837 (JP)
(72) Inventor: WAKASA, Ayaka, Saitama-city Saitama 338-0837 (JP)
(74) Representative: Ter Meer Steinmeister & Partner
(86) International application number: PCT/JP2018/024457
(87) International publication number: WO 2019/004316

(57) **Abstract**

A curable silicone composition for use with a dispenser is used for application in which the composition is to be cured after being ejected from a dispenser. The curable silicone composition for use with a dispenser comprises a reaction-curing type silicone, which is converted into a matrix after curing, silica particles and a modified silicone oil. According to the present invention, a curable silicone composition for use with a dispenser which enables reduction in such a dimensional change that is initiated after ejection from the dispenser can be provided.

## Description

### Technical Field

The present invention relates to a curable silicone composition for use with a dispenser which is to be cured after being ejected from a dispenser.

### Background Art

For example, a cured product obtained by curing a silicone composition is used for electronic equipment and structures for building (Patent Literatures 1 and 2). Patent Literature 2 discloses a silicone composition comprising a reaction-curing type silicone and silica particles.

### Citation List

### Patent Literature

PTL1: JP 2012-230805 A

PTL2: JP 2002-294910 A

### Summary of Invention

### Technical Problem

In the case when a reaction-curing type composition is cured after applying the composition to a given portion, use of a dispenser which ejects a reaction-curing type composition is advantageous from the viewpoint of, for example, improving efficiency of applying the composition. In the case when the silicone composition is ejected using a dispenser, fluidity of the composition after ejection is high, and the shape of the silicone composition immediately after application to a given portion easily changes with time. Thus, there is a risk that, for example, a height (thickness) dimension may be insufficient in a cured product obtained by curing the silicone composition.

An object of the present invention is to provide a curable silicone composition for use with a dispenser which enables reduction of a dimensional change after ejection from the dispenser.

### Solution to Problem

In order to accomplish the above-mentioned object, an aspect of the present invention is a curable silicone composition for use with a dispenser which is to be cured after being ejected from a dispenser, comprising a reaction-curing type silicone, which is converted into a matrix after curing, silica particles and a modified silicone oil.

### Advantageous Effects of Invention

According to the present invention, a dimensional change of the composition after ejection from a dispenser can be reduced.

### Brief Description of Drawings

[Fig. 1] Fig. 1 is a schematic drawing showing an example of use of the composition.
[Fig. 2] Fig. 2 is a schematic drawing showing an example of use of the composition.
[Fig. 3] Fig. 3 is a schematic drawing showing an example of use of the cured product.
[Fig. 4] Fig. 4 is a schematic drawing showing an example of use of the composition.
[Fig. 5] Fig. 5 is a schematic drawing showing an example of use of the cured product.
[Fig. 6] Fig. 6 is a schematic drawing showing an example of use of the cured product.

### Description of Embodiments

Hereinafter, embodiments of the curable silicone composition for use with a dispenser will be described.

The curable silicone composition for use with a dispenser is used for application in which the composition is cured after being ejected from a dispenser. The curable silicone composition for use with a dispenser comprises a reaction-curing type silicone, which is converted into a matrix after curing, silica particles and a modified silicone oil.

### <Reaction-curing type silicone>

The reaction-curing type silicone is a liquid polyorganosiloxane, and has a reactive group which can form a crosslinked structure. The reaction-curing type silicone includes, for example, an addition reaction-curing type silicone, a radical reaction-curing type silicone, a condensation reaction-curing type silicone, an ultraviolet- or electron beam-curable silicone, and a moisture-curable silicone. Among the reaction-curing type silicones, an addition reaction-curing type silicone is preferably used. The curable silicone composition for use with a dispenser can be cured within a temperature range between -10°C or more and 80°C or less or at room temperature of -10°C or more and 40°C or less, by employing an addition reaction-curing type silicone. Curing temperature of an addition reaction-curing type silicone can be adjusted by, for example, a platinum catalyst. Additionally, an addition reaction-curing type silicone is an addition reaction-type organopolysiloxane. The addition reaction-type organopolysiloxane preferably comprises an alkenyl group-containing organopolysiloxane (main agent) and a hydrogen organopolysiloxane (curing agent).

### <Silica particle>

Silica particles are used for adjusting flowability of the curable silicone composition for use with a dispenser. The silica particles may be hydrophilic silica particles, or may be hydrophobic silica particles. The hydrophilic silica particles have a silanol group (Si-OH) on the surface of the particle, and the hydrophilic silica particles are constituted so that a hydroxyl group of the silanol group is capable of hydrogen bonding. The hydrophobic silica particles are particles in which a hydroxyl group on the surface of the particle is substituted (hydrophobized) with a hydrophobic group. The silica particles may be dry process silica particles, or may be wet process silica particles. As the silica particles, for example, fumed silica can be used.

The mean primary particle size of the silica particles is preferably within a range between 5 nm or more and 40 nm or less. In the case when the mean primary particle size of the silica particles is 5 nm or more, the curable silicone composition for use with a dispenser can easily increase viscosity. In the case when the mean primary particle size of the silica particles is 40 nm or less, it is easy to improve smoothness of the surface of the cured product produced by curing the curable silicone composition for use with a dispenser. The mean primary particle size of the silica particles can be measured by, for example, a laser diffraction/scattering method.

The content of the silica particles in the curable silicone composition for use with a dispenser is preferably within a range between 1 part by mass or more and 20 parts by mass or less, and more preferably within a range between 3 parts by mass or more and 15 parts by mass or less, based on 100 parts by mass of the reaction-curing type silicone. In the case when the amount of the silica particles is increased, fluidity of the composition after ejection from the dispenser can be more suppressed. In the case when the amount of the silica particles is decreased, smoothness of the surface of the cured product produced by curing the curable silicone composition for use with a dispenser can be improved.

### <Modified silicone oil>

A modified silicone oil is used for adjusting flowability of the curable silicone composition for use with a dispenser. The modified silicone oil is a silicone oil in which an organic group which modifies a silicone oil is introduced into a main chain having a siloxane bond, a side chain binding to the main chain, or the terminus of the main chain. As the modified silicone oil, a non-reactive modified silicone oil is preferable in terms of preservation stability of the composition and stability of physical properties of the cured product. The non-reactive modified silicone oil includes, for example, a polyether-modified silicone, an aralkyl-modified silicone, a fluoroalkyl-modified silicone, a long-chain alkyl-modified silicone, a higher fatty acid ester-modified silicone, a higher fatty acid amide-modified silicone and a phenyl-modified silicone. One, or two or more types of the modified silicone oil(s) can be used.

Among the non-reactive modified silicone oils, a polyether-modified silicone is preferable. The polyether-modified silicone comprises an organic group having a polyether structure, and has, for example, a main chain made of a siloxane bond and a side chain or both termini formed of an organic group of the polyether structure. The kinetic viscosity of the polyether-modified silicone is preferably 700 mm²/s or more and 900 mm²/s or less at 25°C.

The content of the modified silicone oil in the curable silicone composition for use with a dispenser is preferably within a range between 0.1 parts by mass or more and 1 part by mass or less, and more preferably within a range between 0.1 parts by mass or more and 0.5 parts by mass or less, based on 100 parts by mass of the reaction-curing type silicone. The content of the modified silicone oil in the curable silicone composition for use with a dispenser is preferably within a range between 1 part by mass or more and 10 parts by mass or less, and more preferably within a range between 1.5 parts by mass or more and 7 parts by mass or less, in relative to 100 parts by mass of silica particles. In the case when the amount of the modified silicone oil is increased, fluidity of the composition after ejection from the dispenser can be more suppressed. In the case when the amount of the modified silicone oil is decreased, for example, the cost of the curable silicone composition for use with a dispenser can be reduced.

Additionally, the curable silicone composition for use with a dispenser may further comprise an additive, as necessary.

### <Product form and physical properties>

The curable silicone composition for use with a dispenser may be composed of, for example, one agent comprising a moisture-curable silicone, or may be composed of two agents that are to be mixed when in use. In the case when the curable silicone composition for use with a dispenser is composed of two agents, the curable silicone composition for use with a dispenser is preferably composed of a first agent comprising a main agent of an addition reaction-type organopolysiloxane and a second agent comprising a curing agent of an addition reaction-type organopolysiloxane.

The silica particles and the modified silicone oil may be comprised in at least one of the first agent and the second agent of the curable silicone composition for use with a dispenser. The silica particles are preferably divided and comprised in both the first agent and the second agent, from the viewpoint of easily increasing the uniformity of the mixture of the first agent and the second agent. In addition, the modified silicone oil is also preferably divided and comprised in both the first agent and the second agent, from the viewpoint of easily increasing the uniformity of the mixture of the first agent and the second agent. That is to say, more preferably, the curable silicone composition for use with a dispenser is composed of a first agent comprising a main agent of an addition reaction-type organopolysiloxane, silica particles and a modified silicone oil, and a second agent comprising a curing agent of the addition reaction-type organopolysiloxane, silica particles and a modified silicone oil.

The first agent of the curable silicone composition for use with a dispenser preferably comprises silica particles within a range between 10% by mass or more and 90% by mass or less, based on the total amount of the silica particles comprised in the first agent and the second agent. The first agent of the curable silicone composition for use with a dispenser preferably comprises a modified silicone oil within a range between 10% by mass or more and 90% by mass or less, based on the total amount of the modified silicone oil comprised in the first agent and the second agent.

The viscosity of the curable silicone composition for use with a dispenser is preferably within a range between 100 Pa·s or more and 800 Pa·s or less. The thixotropic ratio of the curable silicone composition for use with a dispenser is preferably within a range between 3 or more and 10 or less and the viscosity thereof is more preferably 120 Pa·s or more, still more preferably 300 Pa·s or more, and even more preferably 400 Pa·s or more. The viscosity of the curable silicone composition for use with a dispenser is viscosity measured by a commercially available viscometer under a condition of a rotational speed of 1 rpm. The thixotropic ratio of the curable silicone composition for use with a dispenser is a ratio of first viscosity to second viscosity (thixotropic ratio = first viscosity / second viscosity), wherein the first viscosity is defined as the viscosity measured under a condition of a rotational speed of 1 rpm, and the second viscosity is defined as the viscosity measured under a condition of a rotational speed of 10 rpm. Additionally, the above-mentioned each viscosity is a value measured at 25°C.

In the case when the viscosity and the thixotropic ratio of the curable silicone composition for use with a dispenser are within the above-mentioned range, it is easy to eject the curable silicone composition for use with a dispenser from a dispenser, and fluidity of the composition after ejection from the dispenser can be more suppressed. Additionally, the above-mentioned ranges of the viscosity and the thixotropic ratio of the curable silicone composition for use with a dispenser are applied to both the first agent and the second agent, in the case when the curable silicone composition for use with a dispenser is composed of the first agent and the second agent.

The hardness of the cured product produced by curing the curable silicone composition for use with a dispenser is preferably within a range between 70 or more and 190 or less, and more preferably 80 or more and 140 or less in terms of the penetration (25°C) defined by JIS K2207. Thereby, for example, in the case when the cured product is used as a sealing material arranged between members, sealability between the members can be secured, and an excessive load on the members can be reduced.

### <Instructions for use and action>

In order to use the curable silicone composition for use with a dispenser, first, a vessel such as a syringe is charged with the composition, and thereafter set in a dispenser.

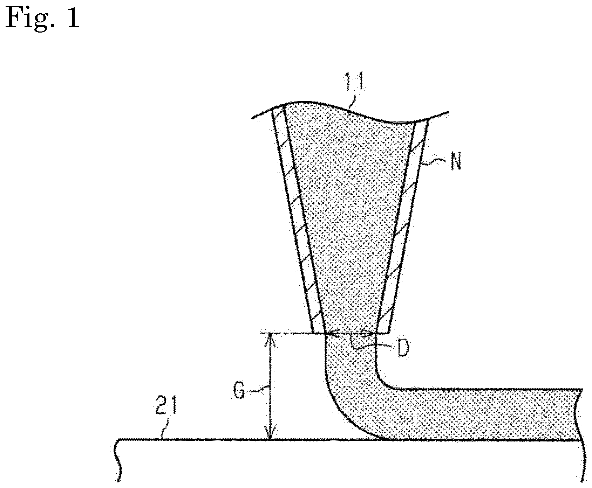

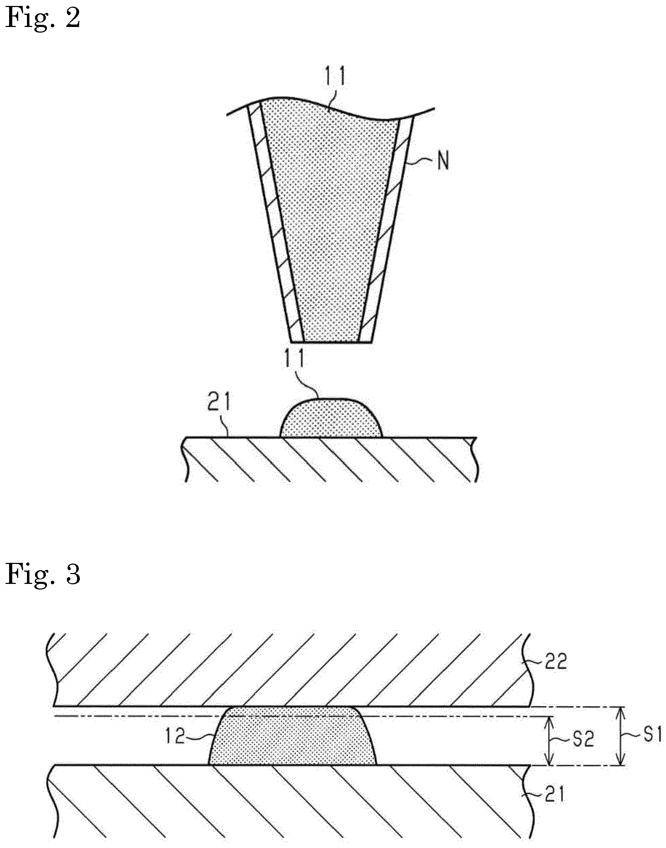

As shown in Fig. 1 and Fig. 2, the dispenser is equipped with a needle N having a discharge opening, from which a coating material 11 composed of the curable silicone composition for use with a dispenser is ejected. The coating material 11 is ejected from the needle N of the dispenser, so that the coating material 11 is applied to the upper surface (flat surface) of a member to be coated 21. The shape of the coating material 11 applied to the upper surface of the member to be coated 21 is linear shape, or may be, for example, dotted shape. In addition, in the member to be coated 21, the part to which the coating material 11 is to be applied, that is to say, the part on which a cured product is to be provided, is not limited to a flat surface, but may be a convex surface or a concave surface. When the outer surface of the member to be coated 21 has an inclined surface, the coating material 11 may be applied to the inclined surface.

As the dispenser, a dispenser equipped with a control part which automatically controls coating conditions, such as position and motion of the needle N to the member to be coated 21, and the amount of the coating material 11 to be ejected, can be preferably used. In the case when the curable silicone composition for use with a dispenser is composed of the first agent and the second agent, a dispenser equipped with a mixing function may be used.

Preferably, the needle N has, for example, a needle diameter D of 0.10 to 0.90 mm. In the case when a needle N having a needle diameter D of 0.10 to 0.90 mm is used, a gap G between the tip of the needle N (discharge opening) and the member to be coated 21 is preferably set to be, for example, 0.2 to 1.8 mm.

Next, the coating material 11 on the upper surface of the member to be coated 21 is cured under curing conditions that is fit for the reaction-curing type silicone. In such a case, the coating material 11 according to the present embodiment comprises a reaction-curing type silicone, which is converted to a matrix after curing, silica particles, and a modified silicone oil. When this constitution is employed, fluidity of the coating material 11 after ejection from the dispenser (needle N) can be suppressed. That is to say, change in shape of the coating material 11 can be suppressed in the upper surface of the member to be coated 21. The cured product obtained from the coating material 11 can be used as, for example, a sealing material, an impact absorber or a vibration absorber.

As shown in Fig. 3, by combining a mated member 22 with the member to be coated 21 provided with a cured product 12, for example, a housing is assembled. In such a case, when the mated member 22 is assembled to the member to be coated 21, an actual gap S1 between the member to be coated 21 and the mated member 22 is sometimes wider than a targeted gap S2 that is set at the time of designing. Even in such a case, since fluidity of the coating material 11 is suppressed as described above, it is easy to keep a thickness dimension of the cured product 12 in a given size. Thus, for example, even if the gap between the member to be coated 21 and the mated member 22 becomes wider due to design tolerance between the member to be coated 21 and the mated member 22, the cured product can be brought into contact with the mated member 22, and as a result, sealability between the member to be coated 21 and the mated member 22 can be secured.

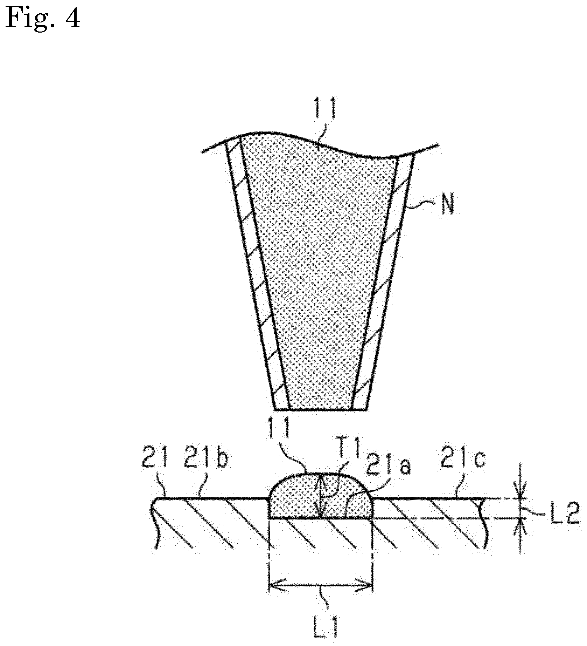

Fig. 4 shows an example of application of the coating material 11 to the member to be coated 21 having a groove 21a. The groove 21a of the member to be coated 21 is formed between a convex portion 21b and a convex portion 21c, which are possessed by the member to be coated 21. In the case when the coating material 11 is applied to the groove 21a of the member to be coated 21, it is preferable to use a needle N having a needle diameter D that is smaller than a width dimension L1 (groove width) of the groove 21a. The coating material 11 is applied to the groove 21a so that a thickness dimension T1 (height dimension) of the coating material 11 is larger than a depth dimension L2 of the groove 21a.

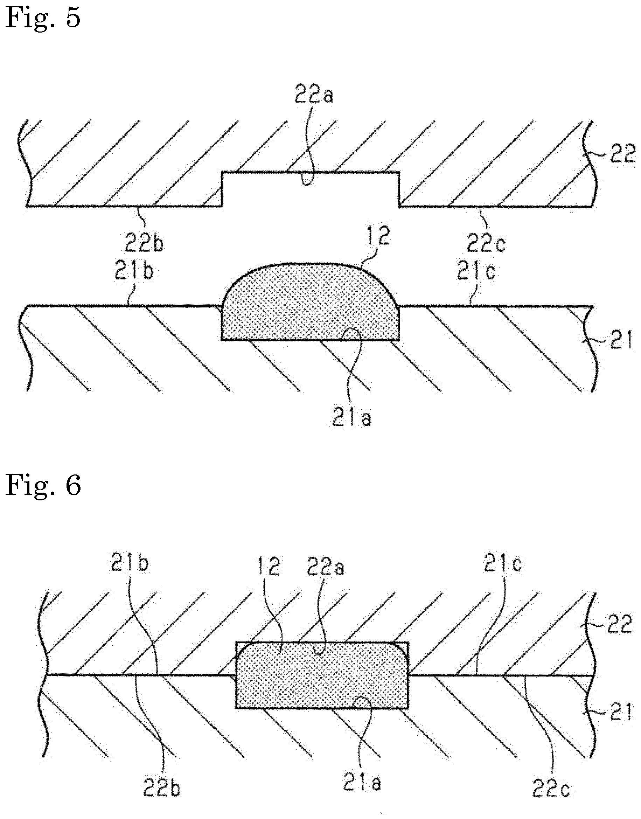

As shown in Fig. 5, a mated member 22 is assembled to the member to be coated 21 provided with the cured product 12 of the coating material 11. The mated member 22 has a groove 22a arranged opposite to the groove 21a of the member to be coated 21. The groove 22a of the mated member 22 is also formed between a convex portion 22b and a convex portion 22c, which are possessed by the mated member 22.

As shown in Fig. 6, in a state where the mated member 22 is assembled to the member to be coated 21, the convex portions 21b and 21c of the member to be coated 21 are brought into contact with the convex portions 22b and 22c of the mated member 22. In addition, in this state, the cured product 12 is put between the inner bottom of the groove 21a of the member to be coated 21 and the inner bottom of the groove 22a of the mated member 22. The cured product 12 arranged in this way achieves sealing between the member to be coated 21 and the mated member 22.

On the other hand, when the coating material 11 applied to the groove 21a of the member to be coated 21 flows out onto the convex portions 21b and 21c from the groove 21a, a cured product is formed on the convex portions 21b and 21c. In the case when such a cured product is formed on the convex portions 21b and 21c of the member to be coated 21 in this way, the cured product is put between the convex portions 21b and 21c of the member to be coated 21 and the convex portions 22b and 22c of the mated member 22 upon assembling the mated member 22 thereto, and thus accuracy of assembling is reduced. The accuracy of assembling tends to be more lowered as the amount of the coating material 11 flowing out increases more. Regarding this problem, change in shape of the coating material 11 can be suppressed by using the coating material 11 according to the present embodiment as described above. That is to say, since the coating material 11 applied to the groove 21a of the member to be coated 21 hardly flows out onto the convex portions 21b and 21c from the groove 21a, formation of a cured product on the convex portions 21b and 21c can be suppressed. Thereby, accuracy of assembling of the member to be coated 21 and the mated member 22 can be improved. In addition, a cured product is hardly formed on the convex portions 21b and 21c even if the depth of the groove 21a is relatively shallow, by using the coating material 11 according to the present embodiment. Therefore, accuracy of assembling of the member to be coated 21 and the mated member 22 can be improved, and thickness of the member to be coated 21 can also be suppressed.

Additionally, even if the groove 22a of the mated member 22 is omitted, accuracy of assembling of the member to be coated 21 and the mated member 22 can be improved by adjusting the amount of the coating material 11 applied, as necessary.

The member to be coated 21 includes, for example, a panel, a fitting member to which a panel is fit, and a housing. The mated member 22 includes, for example, a fitting member to which the member to be coated 21 is fit, and a housing. Application of the member to be coated 21 includes, for example, application for vehicles, application for electronic equipment, and application for building. The coating material 11 consisting of the curable silicone composition for use with a dispenser can be preferably used for application for forming a sealing material which seals a narrow portion which requires a waterproof function. Articles having a narrow portion which requires a waterproof function include, for example, a smartphone, a tablet device, a portable digital camera, a miniature camera for an unmanned aircraft (drone), and an on-vehicle camera.

According to the embodiments described in detail above, the following effects are exhibited.
(1) The curable silicone composition for use with a dispenser comprises a reaction-curing type silicone, which is converted to a matrix after curing, silica particles and a modified silicone oil. When this constitution is employed, fluidity of the composition after ejection from the dispenser can be suppressed. Therefore, a dimensional change of the composition after ejection from the dispenser can be reduced. Thereby, for example, it is possible to provide a cured product within a given range and to ensure a height (thickness) dimension of the cured product.
   In addition, in the member to be coated, in the case when the outer surface to which the curable silicone composition for use with a dispenser is applied is an inclined surface which is tilted from the horizontal surface, hanging down of the curable silicone composition for use with a dispenser along the inclined surface can be suppressed. Therefore, limitation of an external form and arrangement of the member to be coated is alleviated. Thus, a highly versatile curable silicone composition for use with a dispenser can be provided.
(2) The viscosity of the curable silicone composition for use with a dispenser is preferably within a range between 100 Pa·s or more and 800 Pa·s or less, and the thixotropic ratio thereof is preferably within a range between 3 or more and 10 or less.
   In such a case, it is easy to eject the curable silicone composition for use with a dispenser from a dispenser, and fluidity of the composition after ejection from the dispenser can be more suppressed. Therefore, a load imposed on the dispenser can be decreased, and a dimensional change of the composition after ejection from the dispenser can be further reduced.
(3) The modified silicone oil preferably comprises a polyether-modified silicone.
   In such a case, a dimensional change of the composition after ejection from the dispenser can be further reduced.
(4) The content of the polyether-modified silicone is preferably within a range between 0.1 parts by mass or more and 1 part by mass or less, based on 100 parts by mass of the reaction-curing type silicone. In addition, the content of the polyether-modified silicone is preferably within a range between 1 part by mass or more and 10 parts by mass or less, in relative to 100 parts by mass of the silica particles.
   In such a case, fluidity of the composition after ejection from the dispenser can be more suppressed, and the cost of the curable silicone composition for use with a dispenser can be reduced. Therefore, a dimensional change of the composition after ejection from the dispenser can be further reduced, and versatility can be improved.
(5) The content of the silica particles is preferably within a range between 1 part by mass or more and 20 parts by mass or less, based on 100 parts by mass of the reaction-curing type silicone. In this case, fluidity of the composition after ejection from the dispenser can be more suppressed, and smoothness of the surface of the cured product can be increased. Therefore, a dimensional change of the composition after ejection from the dispenser can be further minimized, and adhesion to the member to be coated is good.
(6) The hardness of the cured product produced by curing the curable silicone composition for use with a dispenser is preferably within a range between 70 or more and 190 or less, in terms of the penetration. In such a case, in the case when the cured product is used as a sealing material arranged between members, it is possible to secure sealability between the members and to decrease an excessive load imposed on the members. Thus, the curable silicone composition for use with a dispenser according to the present embodiment is preferable for, for example, application in forming a sealing material that seals a narrow portion, which requires a waterproof function.

Technical ideas comprehended from the above-mentioned embodiments will be described below.
(i) A method for producing an article comprising a sealing material produced by curing the curable silicone composition for use with a dispenser, wherein the article comprises a member to be coated to which the curable silicone composition for use with a dispenser is to be applied and a mated member to be assembled to the member to be coated, comprising a step of applying the curable silicone composition for use with a dispenser to the member to be coated using a dispenser, a step of forming the sealing material by curing the curable silicone composition for use with a dispenser applied to the member to be coated, and a step of assembling the mated member to the member to be coated provided with the sealing material.
(ii) The method for producing an article, wherein the article is a housing, wherein the member to be coated has a groove, and wherein the curable silicone composition for use with a dispenser is applied to the member to be coated along the groove in the step of applying the curable silicone composition for use with a dispenser.

### Examples

Next, Examples and Comparative Examples will be described.

### (Example 1)

A first agent was prepared by mixing a main agent of an addition reaction-curing type silicone, silica particles and a modified silicone oil. A second agent was prepared by mixing a curing agent of the addition reaction-curing type silicone, silica particles and a modified silicone oil. As the silica particles, hydrophobic fumed silica powder (mean primary particle size: 7 nm), which is a hydrophobic silica particle, was used. As the modified silicone oil, polyether-modified silicone was used. A curable silicone composition for use with a dispenser was composed of the resulting first agent and second agent.

The content of each component contained in the curable silicone composition for use with a dispenser is shown in Table 1 by means of parts by mass.

### (Examples 2 and 3)

In Examples 2 and 3, a curable silicone composition for use with a dispenser was obtained in the same manner as in Example 1, except that the content of hydrophobic silica particles was changed as shown in Table 1.

### (Example 4)

In Example 4, a curable silicone composition for use with a dispenser was obtained in the same manner as in Example 1, except that hydrophilic fumed silica powder (mean primary particle size: 12 nm), which is a hydrophilic silica particle, was used, instead of the hydrophobic silica particles and that the content thereof was as shown in Table 1.

### (Examples 5 and 6)

In Examples 5 and 6, a curable silicone composition for use with a dispenser was obtained in the same manner as in Example 1, except that the content of the modified silicone oil and the content of the hydrophobic silica particles were changed as shown in Table 2.

### (Comparative Examples 1 to 4)

In Comparative Examples 1 to 4, a curable silicone composition for use with a dispenser was obtained in the same manner as in Example 1, except that the composition was changed as shown in Table 3.

### <Viscosity and thixotropic ratio>

The viscosity at 25°C of each of the first agent and the second agent, and the curable silicone composition for use with a dispenser, which was formed by mixing these agents, was measured using a B-type viscometer (Brookfield, a rotational viscometer, DVE). The viscosity of each of the first agent and the second agent, and the curable silicone composition for use with a dispenser (first viscosity) was measured by setting the rotational speed of the spindle (SC4-14) at 1 rpm. The second viscosity was measured by setting the rotational speed of the spindle (SC4-14) at 10 rpm. Additionally, each viscosity of the curable silicone composition for use with a dispenser is viscosity measured immediately after preparing the composition (immediately after mixing the first agent and the second agent).

Measurement results of the first viscosity and calculation results of the thixotropic ratio are shown in Tables 1 to 3.

### <Rate of dimensional change>

A syringe was charged with each of the first agent and the second agent of the curable silicone composition for use with a dispenser, and set in a dispenser (manufactured by Musashi Engineering, Inc.). The first agent and the second agent were then ejected from a needle of the dispenser (needle diameter D: 0.58 mm, circular hole) while mixing the agents by a screw nozzle of the dispenser, and the curable silicone composition for use with a dispenser was applied to the outer surface (flat surface) of a housing. The curable silicone composition for use with a dispenser applied to the outer surface of the housing in a form of a line of 60 mm in length was left to stand for 24 hours, and thereafter the rate of dimensional change was determined as described below.

For the curable silicone composition for use with a dispenser that had been applied in a line-shape, a height dimension H (mm) and a width dimension W (mm) thereof after 24 hours had passed were measured. Measurement points were set at three points: a former point (10 mm point); a midpoint (30 mm point); and a latter point (50 mm point) of the curable silicone composition for use with a dispenser that had been applied in a line-shape.

Rate of change in a height dimension was calculated by substituting the measured height dimension H (mm) and the needle diameter D (mm) in the following Equation (1).

Rate of change in a height dimension (%) = (H - D) × 100 / D ··· (1)

Rate of change in a width dimension was calculated by substituting the measured width dimension W (mm) and the needle diameter D (mm) in the following Equation (2).

Rate of change in a width dimension (%) = (W - D) × 100 / D ··· (2)

Results of the rate of change in a height dimension and the rate of change in a width dimension are shown in Tables 1 to 3.

### <Penetration>

For the cured product produced by curing the curable silicone composition for use with a dispenser, a penetration (25°C) defined by JIS K2207 was measured. The results are shown in Tables 1 to 3.

**[Table 1]**

| | | Example 1 | | Example 2 | | Example 3 | | Example 4 | |
|---|---|---|---|---|---|---|---|---|---|
| | | First agent | Second agent | First agent | Second agent | First agent | Second agent | First agent | Second agent |
| Addition reaction-curing type silicone (parts by mass) | Main agent | 100 | 0 | 100 | 0 | 100 | 0 | 100 | 0 |
| | Curing agent | 0 | 100 | 0 | 100 | 0 | 100 | 0 | 100 |
| Modified silicone oil (parts by mass) | | 0.2 | 0.2 | 0.2 | 0.2 | 0.2 | 0.2 | 0.2 | 0.2 |
| Hydrophobic silica particle (parts by mass) | | 10 | 10 | 7 | 7 | 3.5 | 3.5 | 0 | 0 |
| Hydrophilic silica particle (parts by mass) | | 0 | 0 | 0 | 0 | 0 | 0 | 5 | 5 |
| First viscosity (Pa·s) | First agent and Second agent | 620 | 750 | 330 | 550 | 150 | 150 | 230 | 420 |
| | Silicone composition | 685 | | 440 | | 150 | | 325 | |
| Thixotropic ratio (First viscosity / Second viscosity) | First agent and Second agent | 6.5 | 6.5 | 7.3 | 7.3 | 7.0 | 7.0 | 7.9 | 9.1 |
| | Silicone composition | 6.5 | | 7.3 | | 7.0 | | 8.5 | |
| Rate of change in a height dimension (%) | 10 mm | -3.5 | | -5.2 | | -22.4 | | -8.4 | |
| | 30 mm | -3.8 | | -3.4 | | -24.1 | | -9.1 | |
| | 50 mm | -4.4 | | -1.7 | | -24.1 | | -9.5 | |
| Rate of change in a width dimension (%) | 10 mm | 18.8 | | 25.9 | | 105.2 | | 30.5 | |
| | 30 mm | 20.2 | | 34.5 | | 103.5 | | 41.3 | |
| | 50 mm | 19.9 | | 34.5 | | 103.5 | | 40.2 | |
| Penetration | | 87.0 | | 120.0 | | 180.0 | | 140.0 | |

**[Table 2]**

| | | Example 5 | | Example 6 | |
|---|---|---|---|---|---|
| | | First agent | Second agent | First agent | Second agent |
| Addition reaction -curing type silicone (parts by mass) | Main agent | 100 | 0 | 100 | 0 |
| | Curing agent | 0 | 100 | 0 | 100 |
| Modified silicone oil (parts by mass) | | 0.1 | 0.1 | 0.1 | 0.1 |
| Hydrophobic silica particle (parts by mass) | | 7 | 7 | 3.5 | 3.5 |
| Hydrophilic silica particle (parts by mass) | | 0 | 0 | 0 | 0 |
| First viscosity (Pa·s) | First agent and Second agent | 260 | 450 | 120 | 140 |
| | Silicone composition | 355 | | 130 | |
| Thixotropic ratio (First viscosity / Second viscosity) | First agent and Second agent | 4.5 | 4.5 | 3.0 | 3.0 |
| | Silicone composition | 4.5 | | 3.0 | |
| Rate of change in a height dimension (%) | 10 mm | -10.1 | | -20.6 | |
| | 30 mm | -10.3 | | -20.8 | |
| | 50 mm | -10.3 | | -20.9 | |
| Rate of change in a width dimension (%) | 10 mm | 29.9 | | 100.1 | |
| | 30 mm | 33.3 | | 100.8 | |
| | 50 mm | 35.0 | | 101.0 | |
| Penetration | | 115.0 | | 175.0 | |

**[Table 3]**

| | | Comparative Example 1 | | Comparative Example 2 | | Comparative Example 3 | | Comparative Example 4 | |
|---|---|---|---|---|---|---|---|---|---|
| | | First agent | Second agent | First agent | Second agent | First agent | Second agent | First agent | Second agent |
| Addition reaction-curing type silicone (parts by mass) | Main agent | 100 | 0 | 100 | 0 | 100 | 0 | 100 | 0 |
| | Curing agent | 0 | 100 | 0 | 100 | 0 | 100 | 0 | 100 |
| Modified silicone oil (parts by mass) | | 0 | 0 | 0 | 0 | 0 | 0 | 0.2 | 0.2 |
| Hydrophobic silica particle (parts by mass) | | 6 | 6 | 10 | 10 | 0 | 0 | 0 | 0 |
| Hydrophilic silica particle (parts by mass) | | 0 | 0 | 0 | 0 | 5 | 5 | 0 | 0 |
| First viscosity (Pa·s) | First agent and Second agent | 80 | 100 | 100 | 140 | 220 | 370 | Unmeasurable | Unmeasurable |
| | Silicone composition | 90 | | 120 | | 295 | | Unmeasurable | |
| Thixotropic ratio (First viscosity / Second viscosity) | First agent and Second agent | 6.8 | 6.8 | 4.0 | 4.0 | 7.7 | 8.8 | Uncalculatable | Uncalculatable |
| | Silicone composition | 6.8 | | 4.0 | | 8.3 | | Uncalculatable | |
| Rate of change in a height dimension (%) | 10 mm | -60.0 | | -56.0 | | -52.4 | | -100 or less | |
| | 30 mm | -64.2 | | -57.4 | | -51.9 | | -100 or less | |
| | 50 mm | -62.8 | | -58.1 | | -52.9 | | -100 or less | |
| Rate of change in a width dimension (%) | 10 mm | 204.5 | | 227.6 | | 200.4 | | 300 or more | |
| | 30 mm | 201.7 | | 228.9 | | 190.3 | | 300 or more | |
| | 50 mm | 201.2 | | 229.3 | | 180.3 | | 300 or more | |
| Penetration | | 130.0 | | 85.0 | | 145.0 | | 250.0 | |

Since the curable silicone compositions for use with a dispenser of Comparative Examples 1 to 3 do not comprise a modified silicone oil, the rates of change in a height dimension were values of -50% or less, and the rates of change in a width dimension were values of 180% or more. The viscosity (first viscosity) of the curable silicone composition for use with a dispenser of Comparative Example 3 was relatively high, on the other hand, since viscosity after applying the curable silicone composition for use with a dispenser decreased with time, results of the above-mentioned rates of dimensional change were comparable to the results of Comparative Examples 1 and 2. The curable silicone composition for use with a dispenser of Comparative Example 4 does not comprise silica particles. Since the viscosity of the curable silicone composition for use with a dispenser of Comparative Example 4 was too low, viscosity measurement could not be conducted under the above-mentioned conditions. In addition, in the curable silicone composition for use with a dispenser of Comparative Example 4, the rate of change in a height dimension was significantly lower than -100%. In addition, the rate of change in a width dimension was also significantly higher than 300%.

In contrast, in the curable silicone composition for use with a dispenser of each Example, it can be seen that the absolute values of the rate of change in a height dimension and the rate of change in a width dimension were lower than those of the curable silicone composition for use with a dispenser of each Comparative Example.

### Reference Signs List

11 ··· Coating material (a curable silicone composition for use with a dispenser), 12 ··· Cured product.

## Claims

1. A curable silicone composition for use with a dispenser which is to be cured after being ejected from a dispenser, comprising a reaction-curing type silicone, which is converted into a matrix after curing, silica particles and a modified silicone oil.

2. The curable silicone composition for use with a dispenser according to claim 1, wherein a viscosity of the curable silicone composition for use with a dispenser is within a range between 100 Pa·s or more and 800 Pa·s or less, and wherein a thixotropic ratio of the curable silicone composition for use with a dispenser is within a range between 3 or more and 10 or less.

3. The curable silicone composition for use with a dispenser according to claim 1 or 2, wherein the modified silicone oil comprises a polyether-modified silicone.

4. The curable silicone composition for use with a dispenser according to claim 3, wherein a content of the polyether-modified silicone is within a range between 0.1 parts by mass or more and 1 part by mass or less, based on 100 parts by mass of the reaction-curing type silicone.

5. The curable silicone composition for use with a dispenser according to claim 3 or 4, wherein a content of the polyether-modified silicone is within a range between 1 part by mass or more and 10 parts by mass or less, based on 100 parts by mass of the silica particles.

6. The curable silicone composition for use with a dispenser according to any one of claims 1 to 5, wherein a content of the silica particles is within a range between 1 part by mass or more and 20 parts by mass or less, based on 100 parts by mass of the reaction-curing type silicone.

7. The curable silicone composition for use with a dispenser according to any one of claims 1 to 6, wherein a hardness of the cured product obtained by curing the curable silicone composition for use with a dispenser is within a range between 70 or more and 190 or less in terms of penetration.
